# EUROPÄISCHE PATENTANMELDUNG

(11) **EP 4 717 732 A1**
(43) Veröffentlichungstag der Anmeldung: **01.04.2026**
(21) Anmeldenummer: 25204736.0
(22) Anmeldetag: 25.09.2025
(51) Int. Cl.: C08L 23/28

(54) **KAUTSCHUKPRODUKT FÜR TRINKWASSERANWENDUNGEN**

(30) Priorität: 30.09.2024 DE 102024209519
(71) Anmelder: ContiTech Deutschland GmbH, 30175 Hannover (DE)
(72) Erfinder: Scholz, Jutta, 30175 Hannover (DE); Storre, Jens, 30175 Hannover (DE); Sicking, Lilly, 30175 Hannover (DE)
(74) Vertreter: Preusser, Andrea

(57) **Zusammenfassung**

Die Erfindung betrifft ein Kautschukprodukt (10) für Trinkwasseranwendungen, umfassend ein in einen Gummiwerkstoff (12) eingebettetes textiles Flächengebilde (14), wobei sich der Gummiwerkstoff (12) durch das textile Flächengebilde (14) hindurch erstreckt, wobei der Gummiwerkstoff (12) herstellbar ist durch Vulkanisation einer vulkanisierbaren Kautschukmischung, umfassend: i) Chlorbutylkautschuk, ii) einen oder mehrere Füllstoffe, iii) ein oder mehrere Butylphenol-Formaldehyd-Harze, und iv) eine oder mehrere aromatische Carbonsäuren.

## Beschreibung

Die Erfindung betrifft ein Kautschukprodukt für Trinkwasseranwendungen, eine Vorrichtung für den Einsatz in Trinkwasseranwendungen, umfassend ein solches Kautschukprodukt sowie ein Verfahren zur Herstellung eines solchen Kautschukprodukts. Offenbart werden zudem eine vulkanisierbare Kautschukmischung für den Einsatz bei der Herstellung eines solchen Kautschukprodukts und die Verwendung eines entsprechenden Kautschukprodukts beziehungswiese einer solchen Vorrichtung in einem Trinkwasserleitungssystem oder einer trinkwasserverarbeitenden Vorrichtung.

Kautschukprodukte sind wegen ihrer nahezu einmaligen Eigenschaften hinsichtlich Elastizität und Belastbarkeit für unzählige Anwendungen in verschiedensten Bereichen der Industrie essentiell. Ein wichtiges Anwendungsfeld für Kautschukprodukte sind dabei Anwendungen im Bereich der Fluidführung bzw. des Fluidmanagements. Neben einfachen Produkten wie Schläuchen kommen Kautschukprodukte wegen ihrer nahezu einzigartigen Eigenschaften, insbesondere auch für komplexere Vorrichtungen zum Einsatz, wobei insbesondere die Dehnungsfähigkeit entsprechender Kautschukprodukte ausgenutzt wird, beispielsweise um Druckschwankungen in Fluidführungssystemen zu kompensieren. Ein wichtiges Teilgebiet im Bereich des Fluidmanagements stellen Trinkwasseranwendungen dar. In entsprechenden Trinkwasseranwendungen wird Wasser, welches dafür vorgesehen ist, von Menschen getrunken zu werden oder aus anderen Gründen vergleichbaren Qualitätsanforderungen genügen muss, befördert und/oder verarbeitet.

Wegen der hohen gesundheitlichen Relevanz von Trinkwasser werden hinsichtlich der Belastung des Trinkwassers mit Fremdstoffen hohe Anforderungen gestellt. In vielen Ländern der Welt sind diese hohen Anforderungen dabei in strengen regulatorischen Vorgaben kodifiziert, welche beispielsweise als Trinkwasserverordnung Vorgaben für die Handhabung von Trinkwasser machen. Diese regulatorischen Vorgaben betreffen dabei insbesondere auch Anforderungen an die bei der Handhabung von Trinkwasser eingesetzten Werkstoffe und Vorrichtungen, inklusive etwaiger eingesetzter Kautschukprodukte.

Angesichts stetig zunehmender regulatorischer Vorgaben sind viele Kautschukprodukte, welche noch vor einigen Jahrzehnten eingesetzt werden konnten, heute nicht mehr für den Einsatz in Trinkwasseranwendungen geeignet. Viele Bestandteile, welche noch bis vor kurzem in Kautschukprodukten für Trinkwasseranwendungen zulässig waren, sind hierfür heute vom Gesetzgeber nicht mehr zugelassen, was in vielen Fällen an den eingesetzten Additiven und sonstigen Zuschlagstoffen liegt.

Eine besondere Herausforderung ergibt sich aus der Notwendigkeit, Kautschukprodukte für Trinkwasseranwendungen richtlinienkonform auszuführen, insbesondere dann, wenn statt reinen Gummiprodukten hochleistungsfähige Komposit-Materialien benötigt werden, bei denen das Kautschukprodukt mit einem in dem Gummiwerkstoff eingebetteten textilen Flächengebilde verstärkt wird. Entsprechende textile Verstärkungen erlauben es in vorteilhafter Weise, die Anwendungseigenschaften entsprechender Kautschukprodukte gezielt an die jeweiligen Anwendungserfordernisse anzupassen und hochleistungsfähige, insbesondere hochbelastbare Kautschukprodukte zu erhalten.

Die zuverlässige Verarbeitung und Einbettung entsprechender textiler Flächengebilde in eine Gummierung erfordert bislang regelmäßig den Einsatz sogenannter Haftvermittler, mit denen eine vorteilhafte Verbundfestigkeit zwischen dem textilen Flächengebilde, welches üblicherweise aus einem thermoplastischen Kunststoff besteht, und der umgebenden Elastomeren-Matrix erreicht werden kann. Entsprechende Haftvermittler, welche vom Fachmann auch als "Dip" bezeichnet werden, stellen regelmäßig eine mögliche Quelle für Trinkwasserverunreinigungen dar, sodass der Einsatz von Haftvermittlern bereits heute stark eingeschränkt und in vielen Ländern sogar vollständig verboten ist. Hierdurch ist es nur schwer möglich, hochleistungsfähige Kautschukprodukte bereitzustellen, welche für Trinkwasseranwendungen geeignet sind und trotzdem eine ausgezeichnete Verbundfestigkeit und Haltbarkeit zu einer textilen Verstärkung aufweisen.

Die primäre Aufgabe der vorliegenden Erfindung war es, die Nachteile des Standes der Technik auszuräumen oder zumindest zu verringern.

Insbesondere war es die Aufgabe der vorliegenden Erfindung, ein vorteilhaftes Kautschukprodukt anzugeben, welches trotz strenger regulatorischer Vorgaben für Trinkwasseranwendungen geeignet ist.

Hierbei war es eine wichtige Vorgabe, dass das anzugebende Kautschukprodukt ein mit einem textilen Flächengebilde verstärktes Kautschukprodukt sein sollte, welches auch für anspruchsvolle Aufgaben geeignet ist und dabei eine ausgezeichnete Verbundfestigkeit gewährleistet, sodass insbesondere ein Auftreten von Defekten an der Grenzfläche zwischen dem textilen Flächengebilde und dem Gummiwerkstoff zuverlässig vermieden werden kann.

Es war eine weitere Aufgabe der vorliegenden Erfindung, dass das anzugebende Kautschukprodukt in zeit- und kosteneffizienter Art und Weise herstellbar sein sollte, wobei es eine wünschenswerte Maßgabe war, dass das anzugebende Kautschukprodukt möglichst weitgehend aus solchen Substanzen herstellbar sein sollte, die bereits heute für Kautschukprodukte in Trinkwasseranwendungen zum Einsatz kommen, sodass ein möglichst geringer Aufwand an zusätzlichen Zertifizierungen und Zulassungen für die eingesetzten Materialien benötigt wird.

Darüber hinaus war es eine weitere Aufgabe der vorliegenden Erfindung, eine auf dem anzugebenden Kautschukprodukt basierende Vorrichtung für den Einsatz in Trinkwasseranwendungen bereitzustellen, insbesondere einen Kompensator. Zudem war es auch eine Aufgabe der vorliegenden Erfindung, ein Verfahren zur Herstellung eines entsprechenden Kautschukproduktes bereitzustellen.

Es war eine sekundäre Aufgabe der vorliegenden Erfindung, eine vulkanisierbare Kautschukmischung für den Einsatz bei der Herstellung der anzugebenden Kautschukprodukte bereitzustellen und darüber hinaus eine Verwendung für die entsprechenden Kautschukprodukte bzw. Vorrichtungen in einem Trinkwasserleitungssystem oder einer trinkwasserverarbeitenden Vorrichtung anzugeben.

Die Erfinder der folgenden Erfindung haben nunmehr gefunden, dass sich die vorstehend beschriebenen Aufgaben lösen lassen, wenn in einem Kautschukprodukt ein spezifischer Gummiwerkstoff eingesetzt wird, welcher durch Vulkanisation einer bestimmten vulkanisierbaren Kautschukmischung erhalten werden kann, welche Chlorbutylkautschuk, Füllstoffe und eine Kombination aus Butylphenol-Formaldehyd-Harz und aromatischer Carbonsäure umfasst, wenn darin ein textiles Flächengebilde derart eingebettet wird, dass sich der Gummiwerkstoff durch das textile Flächengebilde hindurch erstreckt, um durch die vorteilhafte hohe Kohäsion im Gummiwerkstoff eine vorteilhafte Durchgriffshaftung durch das textile Flächengebilde hindurch zu realisieren, wodurch eine günstige Verbundfestigkeit realisiert werden kann, wie es in den Ansprüchen definiert ist.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Vorrichtungen, Verfahren, vulkanisierbarer Kautschukmischungen und Verwendungen ergeben sich aus den Merkmalen bevorzugter Kautschukprodukte.

Insbesondere bevorzugte Ausführungsformen der Erfindung sind in den Ausführungsbeispielen offenbart. Besonders bevorzugte Ausführungsformen der Erfindung weisen entsprechend zwei oder mehr, bevorzugt drei oder mehr, ganz besonders bevorzugt vier oder mehr, der nachfolgend offenbarten bevorzugten Merkmale der Erfindung auf, welche auch in den Ausführungsbeispielen realisiert sind.

Insoweit nachfolgend für ein Element, beispielsweise für die Füllstoffe oder die aromatischen Carbonsäuren, sowohl spezifische Mengen bzw. Anteile dieses Elementes als auch bevorzugte Ausgestaltungen des Elementes offenbart werden, sind insbesondere auch die spezifischen Mengen bzw. Anteile der bevorzugt ausgestalteten Elemente offenbart. Zudem ist offenbart, dass bei den entsprechenden spezifischen Gesamtmengen bzw. Gesamtanteilen der Elemente zumindest ein Teil der Elemente bevorzugt ausgestaltet sein kann und insbesondere auch, dass bevorzugt ausgestaltete Elemente innerhalb der spezifischen Gesamtmengen oder Gesamtanteile wiederum in den spezifischen Mengen bzw. Anteilen vorliegen können.

Die Erfindung betrifft ein Kautschukprodukt für Trinkwasseranwendungen, umfassend ein in einen Gummiwerkstoff eingebettetes textiles Flächengebilde,
wobei sich der Gummiwerkstoff durch das textile Flächengebilde hindurch erstreckt,
wobei der Gummiwerkstoff herstellbar ist durch Vulkanisation einer vulkanisierbaren Kautschukmischung, umfassend:
   i) Chlorbutylkautschuk,
   ii) einen oder mehrere Füllstoffe,
   iii) ein oder mehrere Butylphenol-Formaldehyd-Harze, und
   iv) eine oder mehrere aromatische Carbonsäuren.

Das erfindungsgemäßes Kautschukprodukt ist für Trinkwasseranwendungen geeignet und unterliegt dadurch besonders strengen regulatorischen Vorgaben, welche in anderen Bereichen, beispielsweise im Fluidmanagement von Kraftstoffen in dieser Form zumeist nicht bestehen. Das erfindungsgemäße Kautschukprodukt wird dabei regelmäßig mit anderen Komponenten verbunden werden, um eine komplexere Vorrichtung auszubilden, wobei sich hierfür insbesondere die Ausgestaltung in einer schlauchförmigen Struktur als besonders zweckmäßig erweist. Bevorzugt ist also ein erfindungsgemäßes Kautschukprodukt, wobei das Kautschukprodukt für den Einsatz in einer erfindungsgemäßen Vorrichtung ist. Bevorzugt ist zusätzlich oder alternativ ein erfindungsgemäßes Kautschukprodukt, wobei das Kautschukprodukt eine schlauchförmige Struktur aufweist.

Auch wenn das erfindungsgemäße Kautschukprodukt in späteren erfindungsgemäßen Vorrichtungen mit weiteren Bestandteilen kombiniert werden wird, ist es zum Verständnis der vorliegenden Erfindung zweckmäßig, zunächst auf das Kautschukprodukt als solches abzustellen.

Zumindest grundsätzlich ist es denkbar, dass das entsprechende Kautschukprodukt weitere Bestandteile umfasst, die dem Kautschukprodukt zugerechnet werden können, beispielsweise etwaige Beschichtungen oder zusätzliche Lagen, welche zur Optimierung der Anwendungseigenschaften eingebracht werden. Der Fachmann versteht jedoch, dass es für die weit überwiegende Zahl der Fälle bevorzugt ist, wenn das entsprechende Kautschukprodukt weit überwiegend aus dem Gummiwerkstoff und dem textilen Flächengebilde besteht. Bevorzugt ist demgemäß ein erfindungsgemäßes Kautschukprodukt, wobei das Kautschukprodukt bezogen auf die Masse des Kautschukprodukts zu einem Massenanteil von 90 % oder mehr, bevorzugt 95 % oder mehr, besonders bevorzugt im Wesentlichen vollständig, aus dem Gummiwerkstoff und dem textilen Flächengebilde besteht.

Die vorstehende Definition, dass das erfindungsgemäße Kautschukprodukt den Gummiwerkstoff umfasst, trägt dem Umstand Rechnung, dass neben dem spezifischen Gummiwerkstoff, welcher wie vorstehend durch seine Herstellbarkeit aus der Vulkanisation einer vulkanisierbaren Kautschukmischung charakterisiert ist, prinzipiell auch weitere Gummiwerkstoffe, d. h. Vulkanisate anderer vulkanisierbarer Kautschukmischungen, umfasst sein können, beispielsweise um die Oberflächeneigenschaften eines mit schlauchförmiger Struktur ausgebildeten Kautschukprodukts zu beeinflussen. Insoweit weisen die Erfinder jedoch darauf hin, dass der spezifische Gummiwerkstoff der vorliegenden Erfindung maßgeblich für die Vorteilhaftigkeit der entsprechenden Kautschukprodukte mitverantwortlich ist, sodass es zweckmäßig ist, das erfindungsgemäße Kautschukprodukt auch möglichst weitgehend aus dem entsprechenden Gummiwerkstoff auszubilden, wobei insbesondere bevorzugt ist, die für den späteren Kontakt mit Trinkwasser vorgesehene Oberfläche des erfindungsgemäßen Kautschukprodukts zu 95 % oder mehr, bevorzugt 99 % oder mehr, besonders bevorzugt im Wesentlichen zu 100 %, aus dem entsprechenden Gummiwerkstoff auszubilden. Bevorzugt ist daher ein erfindungsgemäßes Kautschukprodukt, wobei der Massenanteil des einen Gummiwerkstoffs bezogen auf die Gesamtmasse aller Vulkanisate im Kautschukprodukt, 80 % oder mehr, bevorzugt 90 % oder mehr, besonders bevorzugt 95 % oder mehr, beträgt.

Das erfindungsgemäße Kautschukprodukt umfasst zumindest ein in den Gummiwerkstoff eingebettetes textiles Flächengebilde, welches dazu dient, im Zusammenspiel mit dem Gummiwerkstoff ein leistungsfähiges Komposit-Material auszubilden, welches insbesondere auch für hochbelastete Anwendungen geeignet ist und eine lange Haltbarkeit aufweist. Grundsätzlich sind dabei verschiedene Ausgestaltungen des textilen Flächengebildes denkbar. Nach Einschätzung der Erfinder eignen sich jedoch insbesondere solche textilen Flächengebilde für die textile Verstärkung, die eine gute strukturelle Integrität aufweisen, wobei insbesondere der Einsatz von Geweben gegenüber dem Einsatz von sogenannten "Non-Woven" besonders bevorzugt ist. Bevorzugt ist also ein erfindungsgemäßes Kautschukprodukt, wobei das textile Flächengebilde ein Gewebe oder ein Gewirk, bevorzugt ein Gewebe, ist.

Es handelt sich in anderen Worten um ein erfindungsgemäßes Kautschukprodukt, wobei der Gummiwerkstoff auf der einen Seite des textilen Flächengebildes mit dem

Gummiwerkstoff auf der anderen Seite des textilen Flächengebildes durch sich durch das textile Flächengebilde erstreckenden Abschnitte des Gummiwerkstoffs verbunden ist. Es kann als besonderer Vorteil der vorliegenden Erfindung gesehen werden, dass das Konzept, das textile Flächengebilde derart in einem Gummiwerkstoff einzubetten, dass dieser sich durch das textile Flächengebilde hindurch erstreckt und dadurch eine von der Kohäsion des Gummiwerkstoffs getragene vorteilhafte Durchgriffshaftung ermöglicht, dazu führt, dass die erzielbare Verbundfestigkeit weniger von der Wechselwirkung zwischen dem Gummiwerkstoff und dem Faserwerkstoff des textilen Flächengebildes abhängt, sodass eine besonders hohe Flexibilität hinsichtlich der Auswahl der textilen Flächengebilde erreicht werden kann.

Die Erfinder der vorliegenden Erfindung haben dabei im Zuge der Entwicklung insbesondere den Einsatz von Polyestertextilien als besonders bevorzugt identifiziert. Bevorzugt ist nämlich ein erfindungsgemäßes Kautschukprodukt, wobei das textile Flächengebilde einen Faserwerkstoff umfasst, der ausgewählt ist aus der Gruppe bestehend aus Polyestern, Polyamiden und Polysulfonen, bevorzugt Polyestern.

In Übereinstimmung mit den vorstehenden Ausführungen kann es als besonderer Vorteil der vorliegenden Erfindung gesehen werden, dass in entsprechenden Textilverstärkten Kautschukprodukten trotz des Verzichts auf den Einsatz von Haftvermittlern, sogenannten "Dips", eine vorteilhafte Verbundfestigkeit erreicht werden kann, die auch bei langen mechanischen Belastungen zuverlässig verhindert, dass im Grenzbereich zwischen dem textilen Flächengebilde und dem Gummiwerkstoff strukturelle Defekte auftreten, die die weitere Nutzung des Kautschukprodukts unmöglich machen würden.

Hierbei ergeben sich nach Einschätzung der Erfinder synergistische Vorteile in dem Zusammenspiel des Harz-basierten Vulkanisationssystems des Gummiwerkstoffs und der strukturellen Ausführung beim Hindurcherstrecken des Gummiwerkstoffs durch das textile Flächengebilde, insbesondere nicht nur gegenüber Ausgestaltungen von herkömmlich vulkanisierten Gummiwerkstoffen, d. h. Gummiwerkstoffen, welche unter Einsatz von Schwefel vulkanisiert werden, sondern insbesondere auch gegenüber Kautschukprodukten, in denen die unterschiedlichen Seiten des textilen Flächengebildes unter Einsatz von Haftvermittler mit unterschiedlichen Gummiwerkstoffen beschichtet werden.

Entsprechend ist es ein großer Vorteil der vorliegenden Erfindung, dass auch trotz des Verzichts auf Haftvermittler ausgezeichnete leistungsfähige Kautschukprodukte erhalten werden können. Der Fachmann versteht, dass es entsprechend besonders bevorzugt ist, diese Vorteile dadurch zu realisieren, dass entsprechend auch auf den Einsatz von Haftvermittlern möglichst weitgehend verzichtet wird. Bevorzugt ist entsprechend ein erfindungsgemäßes Kautschukprodukt, wobei die Oberfläche des textilen Flächengebildes zumindest abschnittsweise, bevorzugt über die überwiegende Fläche, besonders bevorzugt im Wesentlichen vollständig, frei von Haftvermittlerschichten ist. Bevorzugt ist zusätzlich oder alternativ ein erfindungsgemäßes Kautschukprodukt, wobei das textile Flächengebilde den Gummiwerkstoff zumindest abschnittsweise, bevorzugt über die überwiegende Fläche, besonders bevorzugt im Wesentlichen vollständig, unmittelbar kontaktiert.

Der Ausdruck "Haftvermittlerschichten" ist dabei für den Fachmann klar und bezeichnet solche Schichten, die durch Umsetzung eines Haftvermittlers erhalten wurde. Entsprechende Haftvermittler, beispielsweise Resorci-Formaldehy-Latex, sind von zahlreichen Anbietern kommerziell erhältlich und zeichnen sich regelmäßig durch eine polymere, zumeist duroplastische, Matrix aus, in der Latex oder andere Kautschukpartikel verteilt sind, so dass eine gute Anbindung an das Fasermaterial und an den Gummiwerkstoff erreicht werden kann.

In Übereinstimmung mit dem Verständnis des Fachmannes handelt es sich bei dem Gummiwerkstoff um einen hochkomplexen polymären Werkstoff, welcher letztlich nur über sein Herstellungsverfahren sinnvoll zu charakterisieren ist. Entsprechend handelt es sich bei dem Gummiwerkstoff um ein Material, das herstellbar ist durch Vulkanisation einer vulkanisierbaren Kautschukmischung. Beispielhaft ist dabei ein erfindungsgemäßes Kautschukprodukt, wobei das Kautschukprodukt herstellbar ist durch Vulkanisation der vulkanisierbaren Kautschukmischung bei einer Temperatur im Bereich von 130 bis 200 °C, bevorzugt im Bereich von 150 bis 180 °C.

Vulkanisierbare Kautschukmischungen an sich und deren typische Komponenten sowie typische Herstellungsverfahren zum Erhalt entsprechender vulkanisierbarer Kautschukmischungen sind dem Fachmann im Bereich der Kautschukverarbeitung umfassend bekannt.

In Übereinstimmung mit dem üblichen Vorgehen werden die vorstehend definierten Bestandteile der vulkanisierbaren Kautschukmischung teilweise als "ein oder mehrere" eingesetzt. Die Bezeichnung "ein oder mehrere" bezieht sich dabei in branchenüblicher Weise auf die chemische Natur der entsprechenden Verbindungen und nicht auf deren Stoffmenge. Beispielsweise kann die vulkanisierbare Kautschukmischung als Füllstoff ausschließlich Ruß umfassen, was bedeuten würde, dass die vulkanisierbare Kautschukmischung eine Vielzahl der entsprechenden Rußpartikel umfasst.

Insoweit nachfolgend Massenanteile angegeben werden, werden diese in branchenüblicher Weise jeweils zumeist als kombinierte Massenanteile der einen oder der mehreren Komponenten angegeben, wodurch ausgedrückt wird, dass der Massenanteil der entsprechend ausgebildeten Komponenten zusammengenommen die entsprechenden Kriterien erfüllt. Die dabei verwendete Angabe phr (parts per hundred parts of rubber by weight) ist die in der Kautschukindustrie übliche Mengenangabe für Mischungsrezepturen, über die die Massenanteile der Komponenten in der Kautschukmischung bezogen auf die Masse der in der Kautschukmischung vorhandenen hochmolekularen (gewichtsmittlere Molmasse Mw gemäß GPC größer als 60.000 g/mol) Kautschuke angegeben werden, wobei der kombinierte Masseanteil der hochmolekularen Kautschuke in der Kautschukmischung 100 phr entspricht.

Als erste und zentrale Komponente enthält die vulkanisierbare Kautschukmischung Chlorbutylkautschuk, welcher sich für die Erfordernisse, die an das erfindungsgemäße Kautschukprodukt gestellt werden, als wesentliches Element erwiesen hat. Bevorzugt ist ein erfindungsgemäßes Kautschukprodukt, wobei die vulkanisierbare Kautschukmischung Chlorbutylkautschuk in einem kombinierten Massenanteil von 50 phr oder mehr, bevorzugt 60 phr oder mehr, besonders bevorzugt 70 phr oder mehr, umfasst.

In den Experimenten der Erfinder hat sich gezeigt, dass neben dem Chlorbutylkautschuk auch weitere Dienkautschuke vorgesehen werden können, wobei es die Erfinder für zweckmäßig erachten, im Vergleich zum Chlorbutylkautschuk geringere Massenanteile vorzusehen. Bevorzugt ist ein erfindungsgemäßes Kautschukprodukt, wobei die vulkanisierbare Kautschukmischung zusätzlich einen oder mehrere weitere Dienkautschuke umfasst, bevorzugt in einem kombinierten Massenanteil von 10 phr oder mehr, besonders bevorzugt 15 phr oder mehr, ganz besonders bevorzugt 20 phr oder mehr, wobei die weiteren Dienkautschuke bevorzugt ausgewählt sind aus der Gruppe bestehend aus Ethylen-Propylen-Dien-Kautschuk, Butadienkautschuk, natürlichem Polyisopre, synthetischem Polyisopren und Stryol-Butadien-Kautschuk, wobei die weiteren Dienkautschuke besonders bevorzugt ausgewählt sind aus der Gruppe bestehend aus Ethylen-Propylen-Dien-Kautschuken.

Neben dem Chlorbutylkautschuk umfasst die dem erfindungsgemäß einzusetzenden Gummiwerkstoff zugrunde liegende vulkanisierbare Kautschukmischung auch Füllstoffe. Füllstoffe können eingesetzt werden, um die physikalisch-chemischen sowie mechanischen Eigenschaften des Gummiwerkstoffs gezielt an die jeweiligen Anwendungserfordernisse einzustellen. Im Zuge der Entwicklung der vorliegenden Erfindung hat es sich dabei als vorteilhaft erwiesen, als Füllstoff insbesondere auf Ruß zurückzugreifen. Bevorzugt ist insoweit ein erfindungsgemäßes Kautschukprodukt, wobei der eine oder die mehreren Füllstoffe ausgewählt sind aus der Gruppe bestehend aus Rußen, bevorzugt ausgewählt sind aus der Gruppe bestehend aus Rußen mit geringem Gehalt an polyzyklischen aromatischen Kohlenwasserstoffen, besonders bevorzugt von Rußen mit einem Gehalt an polyzyklischen aromatischen Kohlenwasserstoffen von 50 ppm oder weniger, ganz besonders bevorzugt 25 ppm oder weniger. Bevorzugt ist zusätzlich oder alternativ ein erfindungsgemäßes Kautschukprodukt, wobei der kombinierte Massenanteil des einen oder der mehreren Füllstoffe in der vulkanisierbaren Kautschukmischung 10 phr oder mehr, bevorzugt 20 phr oder mehr, besonders bevorzugt 30 phr oder mehr, ganz besonders bevorzugt 40 phr oder mehr, beträgt, und/oder wobei der kombinierte Massenanteil des einen oder der mehreren Füllstoffe in der vulkanisierbaren Kautschukmischung 55 phr oder weniger, bevorzugt 50 phr oder weniger, besonders bevorzugt 45 phr oder weniger, beträgt.

Ein zentraler Aspekt der vorliegenden Erfindung ist darin zu sehen, dass für die Vulkanisation der vulkanisierbaren Kautschukmischung, d. h. für die Vernetzung der vulkanisierbaren Kautschukmischung zu einem Gummiwerkstoff, auf ein spezielles Vulkanisationssystem zurückgegriffen wird. Dieses Vulkanisationssystem setzt auf den Einsatz von Butylphenol-Formaldehyd-Harzen. Entsprechende Harze sind aus dem Stand der Technik grundsätzlich bekannt und von verschiedenen Anbietern kommerziell erhältlich. Besonders gute Ergebnisse wurden von den Erfindern hierbei durch den Einsatz von 4-Tert-Butylphenol-Formaldehyd-Harzen erzielt. Bevorzugt ist demnach ein erfindungsgemäßes Kautschukprodukt, wobei das eine oder die mehreren Butylphenol-Formaldehyd-Harze ausgewählt sind aus der Gruppe bestehend aus 4-tert-Butylphenol-Formaldehyd-Harzen. Bevorzugt ist zusätzlich oder alternativ ein erfindungsgemäßes Kautschukprodukt, wobei das eine oder die mehreren Butylphenol-Formaldehyd-Harze ausgewählt sind aus der Gruppe bestehend Butylphenol-Formaldehyd-Harzen mit einem Erweichungspunkt gemäß ASTM E28-18 (Ring und Ball) im Bereich von 100 bis 130 °C, bevorzugt im Bereich von 105 bis 125 °C.

Im Zuge der Entwicklung ist es den Erfindern gelungen, besonders geeignete Gehalte für die entsprechenden Harze zu identifizieren, mit denen sich bei einer vorteilhaften Reaktionskinetik der Vulkanisation leistungsfähige Gummiwerkstoffe erhalten lassen. Bevorzugt ist ein erfindungsgemäßes Kautschukprodukt, wobei der kombinierte Massenanteil des einen oder der mehreren Butylphenol-Formaldehyd-Harze in der vulkanisierbaren Kautschukmischung 0,1 phr oder mehr, bevorzugt 0,2 phr oder mehr, besonders bevorzugt 0,5 phr oder mehr, ganz besonders bevorzugt 0,8 phr oder mehr, beträgt, und/oder wobei der kombinierte Massenanteil des einen oder der mehreren Butylphenol-Formaldehyd-Harze in der vulkanisierbaren Kautschukmischung 3 phr oder weniger, bevorzugt 2,5 phr oder weniger, besonders bevorzugt 2 phr oder weniger, beträgt.

Darüber hinaus umfasst die vulkanisierbare Kautschukmischung zudem aromatische Carbonsäuren.

Die Erfinder haben gefunden, dass sich besonders vorteilhafte Gummiwerkstoffe insbesondere dann erzielen lassen, wenn der kombinierte Massenanteil der aromatischen Carbonsäure nicht zu hoch gewählt wird. Bevorzugt ist ein erfindungsgemäßes Kautschukprodukt, wobei der kombinierte Massenanteil der einen oder der mehreren aromatischen Carbonsäuren 0,4 phr oder mehr, bevorzugt 0,6 phr oder mehr, besonders bevorzugt 0,8 phr oder mehr, beträgt, und/oder wobei der kombinierte Massenanteil der einen oder der mehreren aromatischen Carbonsäuren 1,8 phr oder weniger, bevorzugt 1,6 phr oder weniger, besonders bevorzugt 1,4 phr oder weniger, beträgt.

Hinsichtlich der chemischen Natur der eingesetzten aromatischen Carbonsäure haben die Erfinder den Einsatz von aromatischen Carbonsäuren mit einer mittleren Zahl an Kohlenstoffatomen als günstig identifiziert. Bevorzugt ist entsprechend ein erfindungsgemäßes Kautschukprodukt, wobei die eine oder die mehreren aromatischen Carbonsäuren ausgewählt sind aus der Gruppe bestehend aus aromatischen Carbonsäuren mit 7 bis 22 Kohlenstoffatomen, bevorzugt 7 bis 20 Kohlenstoffatomen, besonders bevorzugt 7 bis 18 Kohlenstoffatomen.

Bevorzugt ist zusätzlich oder alternativ ein erfindungsgemäßes Kautschukprodukt, wobei die vulkanisierbare Kautschukmischung eine aromatische Carbonsäure mit 7 bis 12 Kohlenstoffatomen, bevorzugt 7 bis 10 Kohlenstoffatomen, besonders bevorzugt Benzoesäure, umfasst, bevorzugt in einem kombinierten Massenanteil im Bereich von 0,4 bis 1,8 phr, besonders bevorzugt im Bereich von 0,8 bis 1,6 phr.

Die Erfinder erachten es als besonders vorteilhaft, in den vulkanisierbaren Kautschukmischungen zumindest ein Metalloxid einzusetzen, insbesondere Zinkoxid. Bevorzugt ist demnach ein erfindungsgemäßes Kautschukprodukt, wobei die vulkanisierbare Kautschukmischung zusätzlich umfasst:
v) ein oder mehrere Metalloxide, bevorzugt Zinkoxid,
bevorzugt in einem kombinierten Massenanteil im Bereich von 1 bis 8 phr, besonders bevorzugt 2 bis 7 phr, besonders bevorzugt 3 bis 6 phr.

Der Fachmann versteht, dass sich ein großer Vorteil aus dem Einsatz des spezifischen Vulkanisationssystems dahingehend ergibt, dass auf den Einsatz von Schwefel oder aus dem Stand der Technik bekannten Schwefelspendern weitgehend verzichtet werden kann. Entsprechend schlagen die Erfinder vor, dass es zielführend ist, diese Vorteile dadurch zu realisieren, dass möglichst wenig Schwefel bzw. Schwefelspender eingesetzt werden. Bevorzugt ist somit ein erfindungsgemäßes Kautschukprodukt, wobei der kombinierte Massenanteil an Schwefel oder Schwefelspendern in der vulkanisierbaren Kautschukmischung 0,01 phr oder weniger, bevorzugt 0,0001 oder weniger, beträgt.

Die Erfindung betrifft auch eine Vorrichtung für den Einsatz in Trinkwasseranwendungen, umfassend ein erfindungsgemäßes Kautschukprodukt.

Erfindungsgemäße Vorrichtungen eignen sich insbesondere dafür, als sogenannte Dehnungskompensatoren ausgeführt zu werden. Hierfür kann das erfindungsgemäße Kautschukprodukt insbesondere zwischen zwei Anschlüsse, beispielsweise Flansche, gesetzt und mit diesen durch geeignete Mittel verbunden werden. Bevorzugt ist entsprechend eine erfindungsgemäße Vorrichtung, wobei die Vorrichtung ein Kompensator, insbesondere ein Dehnungskompensator ist. Bevorzugt ist zusätzlich oder alternativ eine erfindungsgemäße Vorrichtung, wobei die Vorrichtung einen ersten Flansch und einen zweiten Flansch umfasst, wobei sich das Kautschukprodukt vom ersten Flansch zum zweiten Flansch erstreckt. Bevorzugt ist insoweit auch eine erfindungsgemäße Vorrichtung, wobei der erste Flansch und/oder der zweite Flansch, bevorzugt der erste Flansch und der zweite Flansch, aus Metall ausgebildet sind, bevorzugt aus Stahl oder Aluminium.

Besonders bevorzugt ist eine erfindungsgemäße Vorrichtung, wobei die für den Kontakt mit der Flüssigkeit vorgesehene Oberfläche zumindest abschnittsweise, bevorzugt überwiegend, besonders bevorzugt im Wesentlichen vollflächig durch den Gummiwerkstoff gebildet wird.

Die Erfindung betrifft zudem auch ein Verfahren zur Herstellung eines erfindungsgemäßen Kautschukprodukts, umfassend die Verfahrensschritte:
a) Herstellen oder Bereitstellen einer vulkanisierbaren Kautschukmischung, umfassend:
   i) Chlorbutylkautschuk,
   ii) einen oder mehrere Füllstoffe,
   iii) ein oder mehrere Butylphenol-Formaldehyd-Harze,
   iv) eine oder mehrere aromatische Carbonsäuren.
b) Herstellen oder Bereitstellen eines textilen Flächengebildes,
c) Einbetten des textilen Flächengebildes in die vulkanisierbare Kautschukmischung, so dass sich die vulkanisierbare Kautschukmischung durch das textile Flächengebilde erstreckt, und
d) Vulkanisieren der vulkanisierbaren Kautschukmischung.

Offenbart wird in diesem Zusammenhang auch eine vulkanisierbare Kautschukmischung für den Einsatz bei der Herstellung eines erfindungsgemäßen Kautschukprodukts, umfassend:
i) Chlorbutylkautschuk,
ii) einen oder mehrere Füllstoffe,
iii) ein oder mehrere Butylphenol-Formaldehyd-Harze, und
iv) eine oder mehrere Carbonsäuren.

Offenbart wird darüber hinaus auch die Verwendung eines erfindungsgemäßen Kautschukprodukts oder einer erfindungsgemäßen Vorrichtung in einem Trinkwasserleitungssystem oder einer trinkwasserverarbeitenden Vorrichtung. Nachfolgend werden die Erfindung und bevorzugte Ausführungsformen der Erfindung unter Bezugnahme auf die beiliegende Figur näher erläutert und beschrieben. Dabei zeigt:

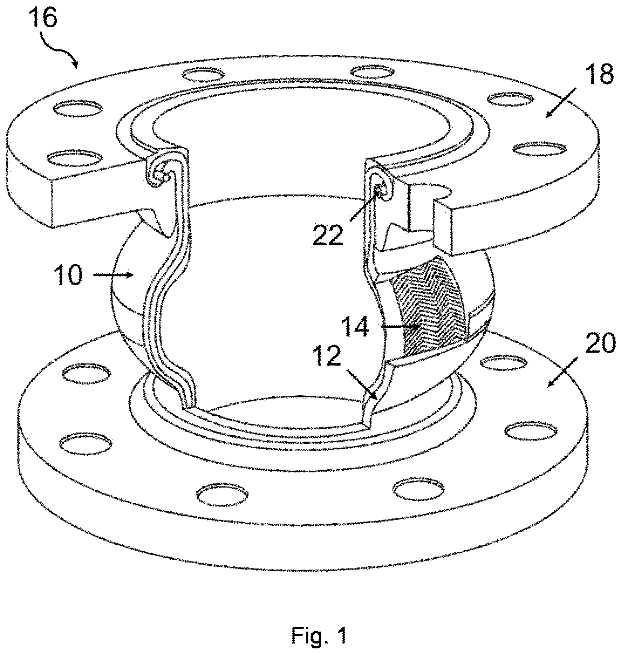

- Fig. 1: ein schematische Darstellung einer erfindungsgemäßen Vorrichtung für den Einsatz in Trinkwasseranwendungen in einer bevorzugten Ausführungsform.

Fig. 1 zeigt eine erfindungsgemäße Vorrichtung 16, welche als Dehnungskompensator ausgeführt ist, und bei der ein erfindungsgemäßes Kautschukprodukt 10, welches eine schlauchförmige Struktur aufweist, in der Vorrichtung 16 zwischen einem ersten Flansch 18 und einem zweiten Flansch 20 eingespannt ist, wobei das Kautschukprodukt 10 über einen Metallcord 22 in einer entsprechenden umlaufenden Haltefixierung befestigt ist.

Das erfindungsgemäße Kautschukprodukt 10 besteht - abgesehen von einer auf der Außenseite aufgebrachten und für Kennzeichnungszwecke vorgesehenen Applikation aus einem anderen Gummiwerkstoff - im Wesentlichen vollständig aus dem Gummiwerkstoff 12 und dem textilen Flächengebilde 14. Das textile Flächengebilde 14 ist dabei als Gewebe aus einem Polyester ausgeführt und vollflächig in dem Gummiwerkstoff 12 eingebettet. Der Gummiwerkstoff 12 bedeckt das textile Flächengebilde 14 auf beiden Seiten und erstreckt sich durch das textile Flächengebilde 14 hindurch, sodass ausgehend von der vorteilhaften Kohäsion des Gummiwerkstoffs 12 auch ohne den Einsatz eines typischen Haftvermittlers eine vorteilhafte Durchgriffshaftung und darauf aufbauend eine vorteilhafte Verbundfestigkeit erreicht werden kann.

Der in Fig. 1 eingesetzte Gummiwerkstoff 12 ist herstellbar durch Vulkanisation einer vulkanisierbaren Kautschukmischung mit den in Tabelle 1 angegebenen Bestandteilen, für die vom jeweiligen Hersteller jeweils Trinkwasserkonformität bestätigt wurde.

**Tabelle 1 (alle Angaben in phr)**

| Bestandteil | Massenanteil |
|---|---|
| Chlorbutylkautschuk | 75 |
| Ethylen-Propylen-Dien-Kautschuk | 25 |
| Ruß mit geringem PAK Gehalt | 42 |
| Benzoesäure | 1,2 |
| 4-tert Butlyphenol-Formaldehyd-Harz | 1 |
| Zinkoxid | 5 |
| Antihaftmittel | 1,2 |

Die resultierende erfindungsgemäße Vorrichtung 16 mit dem erfindungsgemäßen Kautschukprodukt 10 ist in vorteilhafter Weise auch für anspruchsvollste Trinkwasseranwendungen geeignet und genügt auch strengen regulatorischen Vorgaben für die Trinkwasserkonformität.

### Bezugszeichenliste

- 10: Kautschukprodukt
- 12: Gummiwerkstoff
- 14: textiles Flächengebilde
- 16: Vorrichtung
- 18: erster Flansch
- 20: zweiter Flansch
- 22: Metallcord

## Patentansprüche

1. Kautschukprodukt (10) für Trinkwasseranwendungen, umfassend ein in einen Gummiwerkstoff (12) eingebettetes textiles Flächengebilde (14),
wobei sich der Gummiwerkstoff (12) durch das textile Flächengebilde (14) hindurch erstreckt,
wobei der Gummiwerkstoff (12) herstellbar ist durch Vulkanisation einer vulkanisierbaren Kautschukmischung, umfassend:
i) Chlorbutylkautschuk,
ii) einen oder mehrere Füllstoffe,
iii) ein oder mehrere Butylphenol-Formaldehyd-Harze, und
iv) eine oder mehrere aromatische Carbonsäuren.

2. Kautschukprodukt (10) nach Anspruch 1, wobei das textile Flächengebilde (14) ein Gewebe oder ein Gewirk ist.

3. Kautschukprodukt (10) nach einem der Ansprüche 1 oder 2, wobei das textile Flächengebilde (14) einen Faserwerkstoff umfasst, der ausgewählt ist aus der Gruppe bestehend aus Polyestern, Polyamiden und Polysulfonen.

4. Kautschukprodukt (10) nach einem der Ansprüche 1 bis 3, wobei die Oberfläche des textilen Flächengebildes (14) zumindest abschnittsweise frei von Haftvermittlerschichten ist.

5. Kautschukprodukt (10) nach einem der Ansprüche 1 bis 4, wobei der kombinierte Massenanteil der einen oder der mehreren aromatischen Carbonsäuren 1,8 phr oder weniger beträgt.

6. Kautschukprodukt (10) nach einem der Ansprüche 1 bis 5, wobei der kombinierte Massenanteil der einen oder der mehreren aromatischen Carbonsäuren 0,4 phr oder mehr beträgt.

7. Kautschukprodukt (10) nach einem der Ansprüche 1 bis 6, wobei die vulkanisierbare Kautschukmischung eine aromatische Carbonsäure mit 7 bis 12 Kohlenstoffatomen umfasst.

8. Kautschukprodukt (10) nach einem der Ansprüche 1 bis 7, wobei die vulkanisierbare Kautschukmischung zusätzlich umfasst:
v) ein oder mehrere Metalloxide.

9. Kautschukprodukt (10) nach Anspruch 8, wobei die vulkanisierbare Kautschukmischung Zinkoxid umfasst.

10. Vorrichtung (16) für den Einsatz in Trinkwasseranwendungen, umfassend ein Kautschukprodukt (10) nach einem der Ansprüche 1 bis 9.

11. Vorrichtung (16) nach Anspruch 10, wobei die Vorrichtung (16) ein Kompensator ist.

12. Vorrichtung (16) nach einem der Ansprüche 10 oder 11, wobei die Vorrichtung (16) einen ersten Flansch (18) und einen zweiten Flansch (20) umfasst, wobei sich das Kautschukprodukt (10) vom ersten Flansch (18) zum zweiten Flansch (20) erstreckt.

13. Verfahren zur Herstellung eines Kautschukprodukts (10) nach einem der Ansprüche 1 bis 9 oder einer Vorrichtung (16) nach einem der Ansprüche 10 bis 12, umfassend die Verfahrensschritte:
a) Herstellen oder Bereitstellen einer vulkanisierbaren Kautschukmischung, umfassend:
i) Chlorbutylkautschuk,
ii) einen oder mehrere Füllstoffe,
iii) ein oder mehrere Butylphenol-Formaldehyd-Harze,
iv) eine oder mehrere aromatische Carbonsäuren,
b) Herstellen oder Bereitstellen eines textilen Flächengebildes (14),
c) Einbetten des textilen Flächengebildes (14) in die vulkanisierbare Kautschukmischung, so dass sich die vulkanisierbare Kautschukmischung durch das textile Flächengebilde (14) erstreckt, und
d) Vulkanisieren der vulkanisierbaren Kautschukmischung.
